# EUROPEAN PATENT SPECIFICATION

(11) **EP 3 757 078 B1**
(45) Date of publication and mention of the grant of the patent: **26.01.2022**
(21) Application number: 20173535.4
(22) Date of filing: 07.05.2020
(51) Int. Cl.: C03B 33/037, C03B 33/07

(54) **METHOD FOR PROVIDING LAMINATED GLASS PANES STARTING FROM A LAMINATED GLASS SHEET**
VERFAHREN ZUR HERSTELLUNG VON VERBUNDGLASSCHEIBEN AUSGEHEND VON EINER VERBUNDGLASSCHEIBE
PROCÉDÉ POUR FOURNIR DES PANNEAUX EN VERRE LAMINÉ À PARTIR D'UNE FEUILLE DE VERRE LAMINÉ

(30) Priority: 28.06.2019 IT 201900010353
(43) Date of publication of application: 30.12.2020
(73) Proprietor: Macotec S.R.L., 23010 Rogolo, (SO) (IT)
(72) Inventor: COLLI, Maurizio, 23019 TRAONA SO (IT)
(74) Representative: Modiano, Micaela Nadia

(56) References cited:
- EP-A1- 0 834 479
- EP-A1- 2 196 440
- EP-A1- 2 518 029
- EP-B1- 2 196 440

## Description

The present invention relates to a method for providing laminated glass panes starting from a laminated glass sheet and relates in particular to the phase of cutting and separation of the glass panes starting from a larger glass sheet.

Currently, laminated glass panes are produced starting from a larger laminated glass sheet which for the sake of simplicity in the present description and in the accompanying claims is termed "sheet".

In greater detail, glass panes, which normally have a rectangular shape, are produced by cutting them from the sheet with a method termed herein "scoring and separation phase".

The scoring and separation phase is normally performed on a cutting table having a fixed cutting axis, along which a cutting tool moves. In order to perform cuts in different regions of the sheet and having different orientation it is therefore necessary to move (translate and rotate), after each cut, the sheet on the cutting table with respect to the fixed cutting axis.

The handling of the sheet on the cutting table can occur in an automated manner, by means of suitable numeric control handling apparatuses, or manually, by means of an operator.

Normally, numerous glass panes of various dimensions are obtained from a sheet.

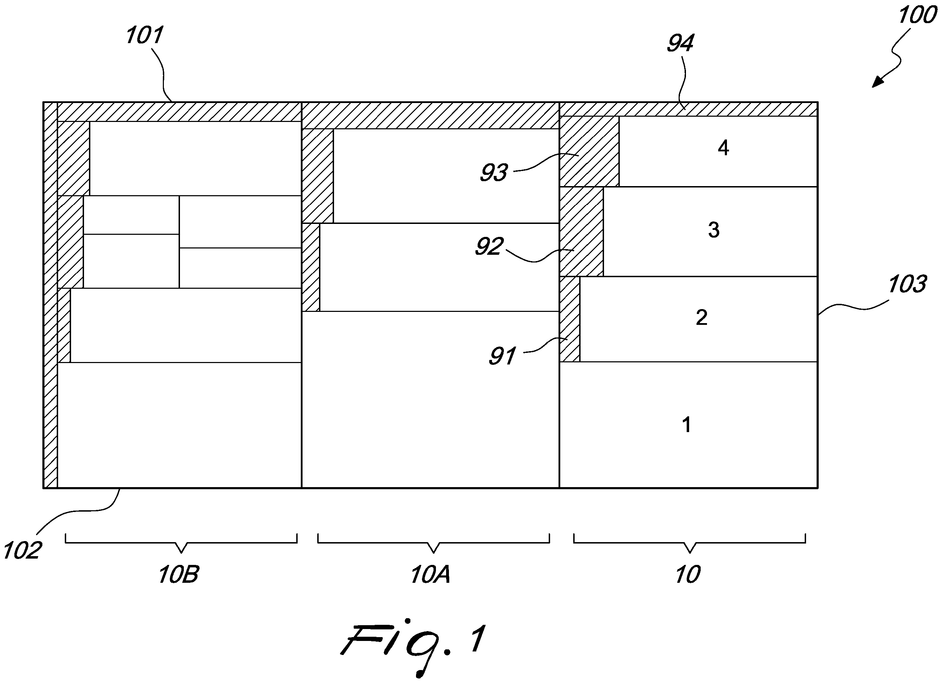

The cutting of the sheet is thus planned so as to minimize waste, for example as shown in the accompanying Figure 1, which shows schematically the optimization of a sheet with the provision of the glass panes 1, 2, 3, 4 (with regard to the first sub-sheet or transverse portion 10) and of the waste pieces 91, 92, 93, 94.

In order to perform optimized cutting, in the background art, first a through cut is performed (the cutting operation being understood as the sequence of operations such as scoring, heating, opening, separation) from edge to edge of the sheet, after which a sheet portion termed "transverse portion" is separated from the sheet.

The transverse portion is then rotated through 90° and repositioned with respect to the cutting axis and then an edge-to-edge cut is performed on it so as to separate a piece of desired width. At this point the rest of the transverse portion is moved away from the cutting axis and, unless the length of the piece already coincides with the length of the glass pane to be produced, the piece is rotated again and repositioned with respect to the cutting axis in order to perform a further cut, at right angles with respect to the previous one, so as to obtain a glass pane of the expected size and a piece of waste. The finished glass pane is then separated from the waste.

Subsequently, in order to cut other glass panes, the transverse portion is repositioned with respect to the cutting axis and, for each glass pane to be produced, the process is repeated which comprises an edge-to-edge cut of the transverse portion in order to obtain a piece, the moving away of the transverse portion, the rotation and repositioning of the piece with respect to the cutting axis, a further cut at right angles to the previous one so as to obtain a glass pane of the expected size and a piece of waste, and separation from the waste.

For each glass pane to be produced it is substantially necessary to move away and reposition the transverse portion and also rotate and reposition a respective piece of sheet.

This process, although useful and practical, requires a considerable amount of time, which it would be desirable to reduce. The need is in fact felt to have a method which, while not affecting the quality and precision of glass pane production, may save time.

EP 2 196 440, EP 2 518 029 and EP 0 834 479 disclose method and machines for cutting glass panes along predetermined lines.

The aim of the present invention is to devise a method for providing laminated glass panes starting from a sheet that solves the technical problem described above, obviates the drawbacks and overcomes the limitations of the background art, allowing to save time with respect to the background art.

Within this aim, an object of the present invention is to devise a method for providing laminated glass panes starting from a sheet that is easy to provide and economically competitive if compared with the background art.

This aim and this and other objects which will become better apparent hereinafter are achieved by a method for providing laminated glass panes starting from a sheet of laminated glass which comprises a cutting and separation phase in which said sheet is scored or scored and separated multiple times in sequence along a fixed cutting axis of a cutting machine and is moved with respect to said fixed cutting axis so as to cut said glass panes, which are separated from the rest of said sheet, said cutting and separation phase comprises:
- a preliminary step for the cutting and separation of the transverse portion, in which said sheet is cut from one edge to an opposite edge so as to obtain a transverse portion which is separated from the rest of the sheet, said transverse portion being constituted by a longitudinal portion of said sheet;
characterised in :
- a first scoring step, in which multiple first mutually parallel score lines are performed, translating the transverse portion with respect to said fixed cutting axis following each one of said first score lines, followed by
- a second rotation step, in which the transverse portion is rotated through 90° with respect to said cutting axis, followed by
- a third step of scoring and separation, in which multiple second score lines are performed which are parallel to each other and perpendicular to said first score lines, translating the transverse portion with respect to said fixed cutting axis following each one of said second score lines; each one of said second score lines intersecting at least one of said first score lines so as to define a plurality of rectangular panes; following each one of said second score lines, an outermost rectangular pane being separated from the rest of the transverse portion together with a corresponding waste which is not separated from said rectangular pane.

Further characteristics and advantages of the present invention will become better apparent from the description of a preferred but not exclusive embodiment of a method for providing laminated glass panes starting from a sheet of laminated glass, illustrated by way of non-limiting example with the aid of the accompanying drawings, wherein:
Figure 1 is a plan view of a sheet, showing the cutting pattern to be performed in order to obtain the various cut-to-size glass panes;
Figure 2 is a view of a series of successive phases of a first step of an embodiment of the method, according to the invention;
Figure 3 is a view of a series of successive phases of a second step of an embodiment of the method, according to the invention.

With reference to the figures, the method for providing laminated glass panes 1, 2, 3, 4 starting from a sheet 100 of laminated glass comprises a sequence of scoring and cutting operations, performed according to an appropriate sequence, which will be described in detail hereinafter. The method can comprise, before and/or after the cutting and separation phase, other known processes (for example in order to prepare and mobilize the sheet or in order to finish the glass pane obtained) that are not the subject matter of the present invention and which therefore will not be described.

The laminated glass panes to which reference is made are glass panes composed of two sheets or layers of glass with one or more plastic films interposed.

The method according to the invention, therefore, relates in particular to the cutting and separation phase, in which an initial sheet 100 is cut along predetermined axes chosen so as to optimize cutting and minimize waste, into pieces which are separated and constitute in practice the glass panes 1, 2, 3, 4 to be produced.

Figure 1 shows an example of a sheet 100 in which the axes along which the score lines and/or the score lines and separations will occur are drawn and the glass panes 1, 2, 3, 4 and the pieces of waste 91, 92, 93, 94 that will be obtained are also indicated.

The term sheet 100 refers to any initial sheet larger than the glass panes 1, 2, 3, 4, to be provided, from which the glass panes 1, 2, 3, 4, are provided by cutting them.

This cutting and separation phase occurs, as in the background art, on a cutting machine (in particular a cutting table) provided with at least one cutting tool which performs cuts or score lines along a cutting axis Y that is fixed with respect to the cutting machine (i.e., with respect to the plane of the machine on which the sheet 100 is rested).

In the cutting and separation phase the sheet 100 is cut multiple times in sequence along the fixed cutting axis Y of the cutting machine and moved (rotated and/or translated) with respect to said fixed cutting axis Y so as to appropriately cut the glass panes 1, 2, 3, 4. In other words, multiple cuts and/or score lines are provided along various axes of the sheet 100 that cut the glass panes 1, 2, 3, 4.

The glass panes 1, 2, 3, 4 thus cut are separated from the rest of the sheet 100. The glass panes 1, 2, 3, 4, 5 thus obtained constitute the finished product or smaller products which can be subjected to other processes that are not the subject matter of the present invention.

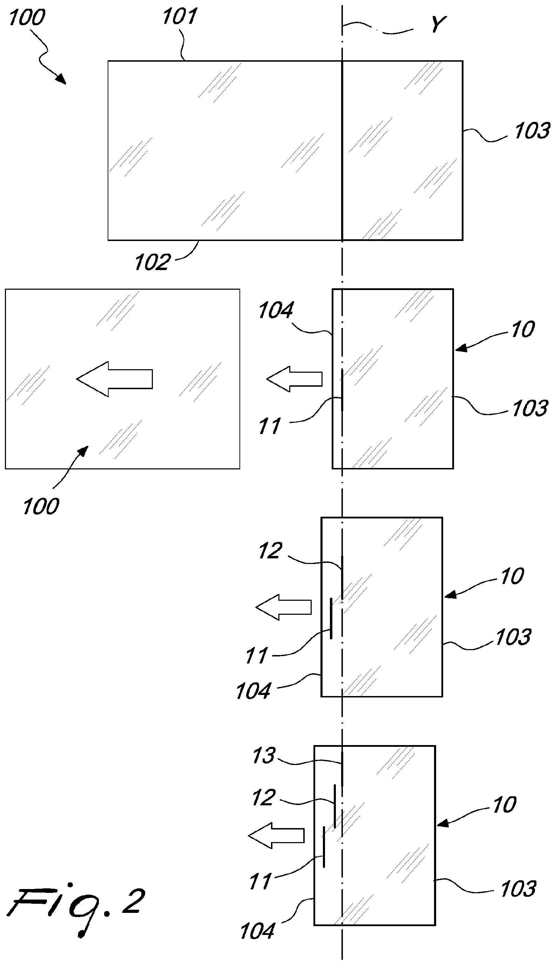

According to the invention, the cutting and separation phase comprises a preliminary step of cutting and separation of the transverse portion (shown in the first image of Figure 2), in which the sheet 100 is cut from one edge 101 to an opposite edge 102 so as to obtain a transverse portion 10 that is separated from the rest of the sheet 100. The transverse portion 10 is in practice constituted by a longitudinal portion of the sheet 100 having an adapted width chosen on the basis of the glass panes 1, 2, 3, 4 that are to be obtained.

Following the preliminary step of cutting and separation of the transverse portion, the method comprises a first scoring step (shown in the subsequent images of Figure 2), in which, using the already favorable orientation of the transverse portion, multiple first score lines 11, 12, 13 are performed which are parallel to each other (i.e., along transverse axes of the transverse portion 10 which are parallel to each other), translating the transverse portion 10 with respect to the fixed cutting axis Y after the execution of each of said first score lines 11, 12, 13, translating in each instance the transverse portion 10 and bringing it to the correct position in order to perform only the score line along the fixed cutting axis Y.

In practice, the first score lines 11, 12, 13 are performed one at a time in sequence, while the transverse portion 10 is stationary with respect to the fixed cutting axis Y and the transverse portion 10 is moved along an axis at right angles to the fixed cutting axis Y following the execution of each first score line 11, 12, 13.

The first score lines 11, 12, 13 are substantially parallel to two external edges 103, 104 of the transverse portion 10 (one 104 of which is constituted by the cut performed in the preliminary step).

Conveniently, the first score lines 11, 12, 13 are shorter than the external edges 103, 104 of the transverse portion and therefore they do not extend from one external edge 103 to the other 104.

It should be noted that in the preferred embodiment the first score lines 11, 12, 13 are all offset along one direction, i.e., their geometric projections on an external edge 103, 104 (i.e., on any axis parallel to an external edge 103, 104) of the transverse portion 10 do not overlap.

Advantageously, the first score lines 11, 12, 13 performed in the first scoring step are provided so as to not produce any separation in the transverse portion 10, i.e., so as to not interrupt its continuity, and therefore preferably they are non-through score lines in that they do not pass completely through the transverse portion 10, since they do not pass through one face (the lower one opposite the cutting tool) of said transverse portion 10.

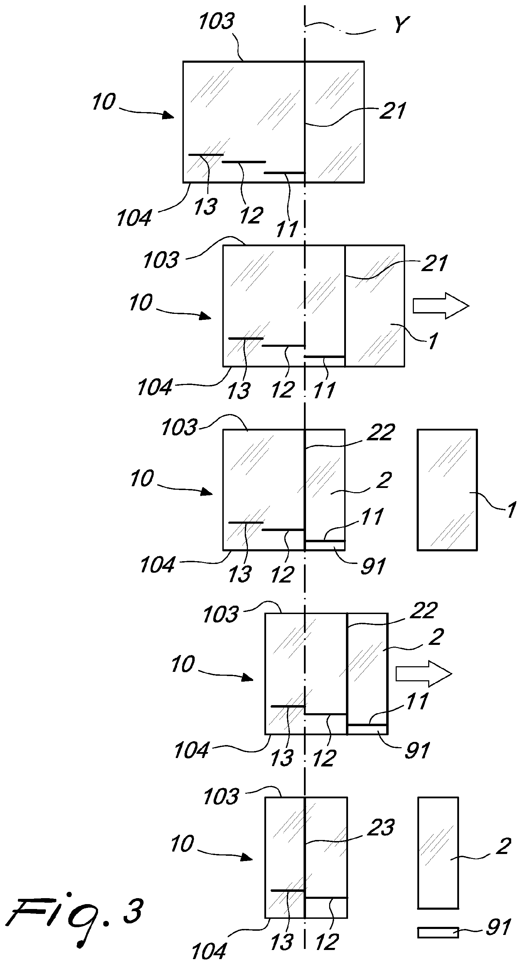

Following the first scoring step, the method provides a second rotation step (not shown and which in practice constitutes the transition from the configuration of Figure 2 to the configuration of Figure 3), in which the transverse portion 10 is rotated through 90° with respect to the cutting axis Y.

The second rotation step is then followed by a third step of scoring and separation (shown in Figure 3), in which multiple second score lines 21, 22, 23 are performed; the second score lines 21, 22, 23 are parallel to each other and at right angles to the first score lines 11, 12, 13 (i.e., along axes of the transverse portion 10 that are parallel to each other and at right angles with respect to said transverse axes) and therefore at right angles to said external edges 103, 104 of the transverse portion 10.

Conveniently, the second score lines 21, 22, 23 are score lines with separation (i.e., they comprise scoring and separation), in that, differently from the first score lines 11, 12, 13, they interrupt the continuity of the transverse portion 10, providing a separation, and therefore have a longer cycle of execution. In the preferred embodiments, the execution of these second score lines 21, 22, 23 comprises the following sequence of operations: scoring of the transverse portion, opening, heating, separation.

Thus, in this third step, second score lines 21, 22, 23 (and separations) are provided which are at right angles to the first score lines 11, 12, 13 performed previously and conveniently intersect them.

In greater detail, the second score lines 21, 22, 23 extend each from an external edge 103 of the transverse portion 10 at least to a respective first score line 11, 12, 13 and preferably up to the other external edge 104.

In this third step, the transverse portion 10 is translated with respect to the fixed cutting axis Y following each one of said second score lines 21 22, 23, aligning in each instance a subsequent longitudinal axis of the transverse portion 10 with the fixed cutting axis Y.

In practice, the second score lines 21, 22, 23 are performed one at a time in sequence, while the transverse portion 10 is stationary with respect to the fixed cutting axis Y and the transverse portion 10 is moved along an axis at right angles to the fixed cutting axis Y following the execution of each second score line 21, 22, 23.

Each one of the second score lines 21, 22, 23 intersects at least one of the first score lines 11, 12, 13 so as to define a plurality of rectangular glass panes 1, 2, 3, 4.

Following each one of the second score lines 21, 22, 23 (i.e., following the execution of each one of them), an outermost rectangular glass pane 1, 2, 3, 4 is separated from the rest of the transverse portion 10 (Figure 3 shows only the separation of a first glass pane 1 and subsequently of a second glass pane 2).

The outermost rectangular glass pane 1, 2, 3, 4 is then moved away (automatically or manually, depending on the type of machine) from the cutting axis Y but not yet separated from the waste 91, 92, 93; this operation is assigned to the operator, who can perform it easily since the first score lines 11 12, 13 have already been performed earlier. Since this manual operation of separation of the edge trimming is performed by the operator away from the cutting axis Y, the machine can perform, simultaneously with the action of the operator, the subsequent operation with an obvious time saving.

Preferably, in this last step, each rectangular glass pane 1, 2, 3, 4 is manually separated from the corresponding waste 91, 92, 93, while a second subsequent score line 22, 23 is performed (as shown for example in Figure 3, the operator separates the glass pane 1, while the cutting tool performs the second score line 22, and subsequently the operator separates the glass pane 2, while the cutting tool performs the subsequent second score line 23, etcetera); in this manner a further time saving is provided. To this end, after the execution of each second score line 21, 22, 23, 24 and separation before the separation of the glass pane 1, 2, 3, 4 defined by said second score line 21, 22, 23, 24, the transverse portion 10 is translated with respect to the fixed cutting axis Y so as to align the latter with the longitudinal axis of the transverse portion 10 along which the subsequent second score line 21, 22, 23, 24 is to be performed and then, while this subsequent second score line 21, 22, 23, 24 is performed, the glass pane 1, 2, 3, 4 is separated from its own waste 91, 92, 93 by the operator.

The method can then resume from the preliminary step of cutting and separation of the transverse portion, separating a subsequent transverse portion 10A, 10B from the sheet 100 cut previously or from another sheet.

By repeating multiple times the process just described, it is possible to produce any number of glass panes 1, 2, 3, 4 of the desired dimensions.

It should be noted that the method according to the invention provides for a smaller number of movements and repositionings of the sheet and of the pieces than the background art and in particular a smaller number of rotations (which are the longest and most laborious passages to perform) and therefore produces a considerable time saving.

In practice, it has been found that for complex cutting processes (i.e., in which multiple glass panes of different dimensions are obtained from a single sheet) the method according to the invention produces a time saving up to 40%-50% with respect to the background art, considering a laminated glass pane having a maximum thickness per sheet equal to 5 mm, a thickness beyond which the manual separation of the waste would be not easy.

Advantageously, the method according to the invention can be provided by means of any cutting table for laminated glass of a known type having a fixed cutting axis.

In an advanced embodiment, the method is used to provide low-emissivity laminated glass panes starting from a low-emissivity laminated glass sheet.

"Low-emissivity" laminated glass panes are provided with a surface coating ("Low-E") on a single face of a sheet, and said coating must be removed before cutting.

Normally, a low-emissivity laminated glass sheet is loaded on the surface of the cutting table with said face provided with the surface coating facing upward.

The removal of the coating is normally performed with an abrasive grinding wheel (which can be of the cup or peripheral type) before the cutting or scoring operation.

Since the grinding wheel is mounted on the same carriage as the cutting tool (and in axial alignment with it), first the removal is performed and then the cutting or scoring is performed centrally with respect to the performed removal.

The grinding wheel and the cutting tool slide along the same fixed cutting axis Y.

Similarly to the background art, in the phases in which full cuts are performed, i.e., scoring, opening, heating, separation, during the first stroke of the cutting carriage the surface coating is removed and subsequently the cutting of the glass pane is completed (the term "cutting" being understood as scoring, opening, heating, separation) and is performed centrally with respect to the performed removal.

Advantageously, in the advanced embodiment of the method, when the first score lines 11, 12, 13 are performed (i.e., in the first scoring step) they are preceded by the removal of the coating.

Therefore, in this embodiment, the first scoring step comprises, for the execution of each first score line 11, 12, 13, the following operations, in the following order:
- the cutting tool (carried by a carriage) is carried from an initial cutting level to a preset higher level along the cutting axis Y;
- the surface coating is removed;
- the carriage cutting tool returns to the removal start level;
- a first score line is provided in the region in which the surface coating has been removed;
- the transverse portion 10 is moved in order to perform the subsequent operations concerning the new first score line.

In practice it has been found that the method for providing laminated glass panes starting from a sheet of laminated glass, according to the present invention, achieves the intended aim and objects, since it allows to save time compared to the solutions of the background art.

Another advantage of the method for providing laminated glass panes starting from a sheet of laminated glass according to the invention is that it is easy to provide and economically competitive if compared with the background art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A method for providing laminated glass panes (1, 2, 3, 4) starting from a sheet (100) of laminated glass which comprises a cutting and separation phase in which said sheet (100) is scored or scored and separated multiple times in sequence along a fixed cutting axis (Y) of a cutting machine and is moved with respect to said fixed cutting axis (Y) so as to cut said glass panes (1, 2, 3, 4), which are separated from the rest of said sheet (100), said cutting and separation phase comprises:
- a preliminary step for the cutting and separation of the transverse portion, in which said sheet (100) is cut from one edge (101) to an opposite edge (102) so as to obtain a transverse portion (10) which is separated from the rest (100') of the sheet (100), said transverse portion (10) being constituted by a longitudinal portion of said sheet (100);
**characterised in**:
- a first scoring step, in which multiple first mutually parallel score lines (11, 12, 13) are performed, translating the transverse portion (10) with respect to said fixed cutting axis (Y) following each one of said first score lines (11, 12, 13), followed by
- a second rotation step, in which the transverse portion (10) is rotated through 90° with respect to said cutting axis (Y), followed by
- a third step of scoring and separation, in which multiple second score lines (21, 22, 23) are performed which are parallel to each other and perpendicular to said first score lines (11, 12, 13), translating the transverse portion (10) with respect to said fixed cutting axis (Y) following each one of said second score lines (21, 22, 23); each one of said second score lines (21, 22, 23) intersecting at least one of said first score lines (11, 12, 13) so as to define a plurality of rectangular panes (1, 2, 3, 4); following each one of said second score lines (21, 22, 23), an outermost rectangular pane (1, 2, 3, 4) being separated from the rest of the transverse portion (10) together with a corresponding waste (91, 92, 93) which is not separated from said rectangular pane (1, 2, 3, 4).

2. The method according to claim 1, **characterized in that** in said third step each rectangular pane (1, 2, 3, 4) is separated from the corresponding waste (91, 92, 93) by an operator, while a second subsequent score line (22, 23) is provided.

3. The method according to claim 2, **characterized in that** in said third step, after the execution of each second score line (21, 22, 23, 24) and before the separation of the pane (1, 2, 3, 4) defined by said second score line (21, 22, 23, 24), the transverse portion (10) is translated with respect to said fixed cutting axis (Y) so as to align the latter with a longitudinal axis of the transverse portion (10) along which a subsequent second score line (22, 23, 24) is to be provided.

4. The method according to one or more of the preceding claims, **characterized in that** in said first scoring step said first score lines (11, 12, 13) are provided so as to not interrupt the continuity of the transverse portion (10).

5. The method according to one or more of the preceding claims, **characterized in that** in said third scoring and separation step said second score lines (21, 22, 23) are score lines with separation which interrupt transverse portion continuity (10).

6. The method according to one or more of the preceding claims, wherein said sheet (100) is a low-emissivity laminated glass sheet which comprises a face provided with a surface coating, **characterized in that** before said preliminary cutting step said sheet (100) is arranged with said face directed toward a cutting tool,
and **in that** said first scoring step comprises, for the execution of each one of said first score lines (11, 12, 13), the following operations:
- the cutting tool is moved from an initial level to a preset level;
- the surface coating is removed;
- the cutting tool returns to the initial level;
- a first score line (11, 12, 13) is provided in the region in which the surface coating has been removed;
- the transverse portion (10) is moved in order to perform the subsequent first score lines (11, 12, 13).

## Patentansprüche

1. Verfahren zum Bereitstellen von Verbundglasscheiben (1, 2, 3, 4), ausgehend von einer Platte (100) aus Verbundglas, das eine Schneid- und Trennstufe aufweist, in welcher die Platte (100) mehrfach hintereinander entlang einer festen Schneidachse (Y) einer Schneidmaschine geritzt oder geritzt und getrennt und in Bezug auf die feste Schneidachse (Y) bewegt wird, um die Glasscheiben (1, 2, 3, 4), die von dem Rest der Platte (100) getrennt werden, zu schneiden,
wobei die Schneid- und Trennstufe Folgendes aufweist:
- einen vorläufigen Schritt zum Schneiden und Trennen des quer verlaufenden Abschnitts, in welchem die Platte (100) von einer Kante (101) zu einer gegenüberliegenden Kante (102) geschnitten wird, um einen quer verlaufenden Abschnitt (10) zu erhalten, der von dem Rest (100') der Platte (100) getrennt wird, wobei der quer verlaufende Abschnitt (10) durch einen längs verlaufenden Abschnitt der Platte (100) gebildet ist;
**dadurch gekennzeichnet, dass**
- auf einen ersten Ritzschritt, in dem mehrere erste zueinander parallele Ritzlinien (11, 12, 13) ausgeführt werden, wobei der quer verlaufende Abschnitt (10) in Bezug auf die feste Schneidachse (Y) nach jeder der ersten Ritzlinien (11, 12, 13) verschoben wird, Folgendes folgt:
- ein zweiter Drehschritt, in welchem der quer verlaufende Abschnitt (10) in Bezug auf die Schneidachse (Y) um 90° gedreht wird, wobei auf diesen Folgendes folgt:
- ein dritter Schritt des Ritzens und Trennens, in dem mehrere zweite Ritzlinien (21, 22, 23) ausgeführt werden, die parallel zueinander und senkrecht zu den ersten Ritzlinien (11, 12, 13) sind, wobei der quer verlaufende Abschnitt (10) in Bezug auf die feste Schneidachse (Y) nach jeder der zweiten Ritzlinien (21, 22, 23) verschoben wird; wobei jede der zweiten Ritzlinien (21, 22, 23) mindestens eine der ersten Ritzlinien (11, 12, 13) schneidet, um mehrere rechteckige Scheiben (1, 2, 3, 4) zu definieren; wobei nach jeder der zweiten Ritzlinien (21, 22, 23) eine äußerste rechteckige Scheibe (1, 2, 3, 4) zusammen mit entsprechendem Abfall (91, 92, 93), der nicht von der rechteckigen Scheibe (1, 2, 3, 4) getrennt wird, von dem Rest des quer verlaufenden Abschnitts (10) getrennt wird.

2. Verfahren nach Anspruch 1, **dadurch gekennzeichnet, dass** in dem dritten Schritt jede rechteckige Scheibe (1, 2, 3, 4) von dem entsprechenden Abfall (91, 92, 93) durch eine Bedienungsperson getrennt wird, während eine zweite nachfolgende Ritzlinie (22, 23) bereitgestellt wird.

3. Verfahren nach Anspruch 2, **dadurch gekennzeichnet, dass** in dem dritten Schritt nach dem Ausführen jeder zweiten Ritzlinie (21, 22, 23, 24) und vor dem Trennen der Scheibe (1, 2, 3, 4), die durch die zweite Ritzlinie (21, 22, 23, 24) definiert ist, der quer verlaufende Abschnitt (10) in Bezug auf die feste Schneidachse (Y) verschoben wird, um Letztere mit einer Längsachse des quer verlaufenden Abschnitts (10) auszurichten, entlang welcher eine nachfolgende zweite Ritzlinie (22, 23, 24) bereitgestellt werden soll.

4. Verfahren nach einem oder mehreren der vorhergehenden Ansprüche, **dadurch gekennzeichnet, dass** in dem ersten Ritzschritt die ersten Ritzlinien (11, 12, 13) bereitgestellt werden, um die Kontinuität des quer verlaufenden Abschnitts (10) nicht zu unterbrechen.

5. Verfahren nach einem oder mehreren der vorhergehenden Ansprüche, **dadurch gekennzeichnet, dass** in dem dritten Ritz- und Trennschritt die zweiten Ritzlinien (21, 22, 23) Ritzlinien mit einer Trennung sind, welche die Kontinuität (10) des quer verlaufenden Abschnitts unterbrechen.

6. Verfahren nach einem oder mehreren der vorhergehenden Ansprüche, wobei die Platte (100) eine Wärmeschutz-Verbundglasplatte ist, die eine mit einer Oberflächenbeschichtung bereitgestellte Seite aufweist, **dadurch gekennzeichnet, dass** die Platte (100) vor dem vorläufigen Schneideschritt so angeordnet wird, dass die Seite zu einem Schneidwerkzeug hin gerichtet ist,
und dass der erste Ritzschritt für die Ausführung jeder der ersten Ritzlinien (11, 12, 13) die folgenden Vorgänge aufweist:
- Bewegen des Schneidwerkzeugs von einem Anfangsniveau auf ein voreingestelltes Niveau;
- Entfernen der Oberflächenbeschichtung;
- Zurückkehren des Schneidwerkzeugs auf das Anfangsniveau;
- Bereitstellen einer ersten Ritzlinie (11, 12, 13) in dem Bereich, in welchem die Oberflächenbeschichtung entfernt wurde;
- Bewegen des quer verlaufenden Abschnitts (10), um die nachfolgenden ersten Ritzlinien (11, 12, 13) auszuführen.

## Revendications

1. Procédé pour fournir des carreaux de verre feuilleté (1, 2, 3, 4) en partant d'une feuille (100) de verre feuilleté, qui comporte une phase de coupe et de séparation pendant laquelle ladite feuille (100) est entaillée ou entaillée et séparée plusieurs fois de suite le long d'un axe de coupe fixe (Y) d'une machine de coupe et est déplacée par rapport audit axe de coupe fixe (Y) de manière à couper lesdits carreaux de verre (1, 2, 3, 4), qui sont séparés du reste de ladite feuille (100),
ladite phase de coupe et de séparation comporte :
- une étape préliminaire pour la coupe et la séparation de la partie transversale, pendant laquelle ladite feuille (100) est coupée depuis un bord (101) jusqu'à un bord opposé (102) de manière à obtenir une partie transversale (10) qui est séparée du reste (100') de la feuille (100), ladite partie transversale (10) étant constituée d'une partie longitudinale de ladite feuille (100),
**caractérisé par** :
- une première étape d'entaillage, pendant laquelle de multiples premiers traits de coupe mutuellement parallèles (11, 12, 13) sont réalisés, déplaçant en translation la partie transversale (10) par rapport audit axe de coupe fixe (Y) en suivant chacun desdits premiers traits de coupe (11, 12, 13), suivie de
- une deuxième étape de rotation, pendant laquelle la partie transversale (10) tourne de 90° par rapport audit axe de coupe (Y), suivie de
- une troisième étape d'entaillage et de séparation, pendant laquelle de multiples seconds traits de coupe (21, 22, 23) sont réalisés qui sont parallèles les uns aux autres et perpendiculaires auxdits premiers traits de coupe (11, 12, 13), déplaçant en translation la partie transversale (10) par rapport audit axe de coupe fixe (Y) en suivant chacun desdits seconds traits de coupe (21, 22, 23), chacun desdits seconds traits de coupe (21, 22, 23) croisant au moins un desdits premiers traits de coupe (11, 12, 13) de manière à définir une pluralité de carreaux rectangulaires (1, 2, 3, 4), en suivant chacun desdits seconds traits de coupe (21, 22, 23), un carreau rectangulaire le plus à l'extérieur (1, 2, 3, 4) étant séparé du reste de la partie transversale (10) en association avec une chute (91, 92, 93) correspondante qui n'est pas séparée dudit carreau rectangulaire (1, 2, 3, 4).

2. Procédé selon la revendication 1, **caractérisé en ce qu'**à ladite troisième étape, chaque carreau rectangulaire (1, 2, 3, 4) est séparé de la chute (91, 92, 93) correspondante par un opérateur, alors qu'un second trait de coupe (22, 23) subséquent est effectué.

3. Procédé selon la revendication 2, **caractérisé en ce qu'**à ladite troisième étape, après l'exécution de chaque second trait de coupe (21, 22, 23, 24) et avant la séparation du carreau (1, 2, 3, 4) défini par ledit second trait de coupe (21, 22, 23, 24), la partie transversale (10) est déplacée en translation par rapport audit axe de coupe fixe (Y) de manière à aligner ce dernier avec un axe longitudinal de la partie transversale (10) le long de laquelle un second trait de coupe (22, 23, 24) subséquent doit être effectué.

4. Procédé selon une ou plusieurs des revendications précédentes, **caractérisé en ce qu'**à ladite première étape d'entaillage, lesdits premiers traits de coupe (11, 12, 13) sont effectués de manière à ne pas interrompre la continuité de la partie transversale (10).

5. Procédé selon une ou plusieurs des revendications précédentes, **caractérisé en ce qu'**à ladite troisième étape d'entaillage et de séparation, lesdits seconds traits de coupe (21, 22, 23) sont des traits de coupe avec séparation qui interrompent la continuité de la partie transversale (10).

6. Procédé selon une ou plusieurs des revendications précédentes, dans lequel ladite feuille (100) est une feuille de verre feuilleté à faible émissivité qui comporte une face pourvue d'un revêtement de surface, **caractérisé en ce qu'**avant ladite étape de coupe préliminaire, ladite feuille (100) est agencée avec ladite face dirigée vers un outil de coupe,
et **en ce que** ladite première étape d'entaillage comporte, pour l'exécution de chacun desdits premiers traits de coupe (11, 12, 13), les opérations suivantes :
- l'outil de coupe est déplacé d'un niveau initial à un niveau préréglé,
- le revêtement de surface est retiré,
- l'outil de coupe retourne au niveau initial,
- un premier trait de coupe (11, 12, 13) est effectué dans la zone dans laquelle le revêtement de surface a été retiré,
- la partie transversale (10) est déplacée afin de réaliser les premiers traits de coupe (11, 12, 13) subséquents.
